# FASCICULE DE BREVET EUROPEEN

(11) **EP 1 933 056 B1**
(45) Date de publication et mention de la délivrance du brevet: **09.09.2009**
(21) Numéro de dépôt: 07123056.9
(22) Date de dépôt: 12.12.2007
(51) Int. Cl.: F16D 66/02

(54) **Corps de témoin d'usure de garniture de friction de véhicule automobile et témoin d'usure comprenant un tel corps**
Körper der Verschleißanzeige eines Kraftfahrzeug-Reibbelags und Verschleißanzeige, die einen solchen Körper umfasst
Wear indicator element for the friction lining of an automobile and wear indicator including such an element

(30) Priorité: 13.12.2006 FR 0655479
(43) Date de publication de la demande: 18.06.2008
(73) Titulaire: COMPAGNIE PLASTIC OMNIUM, 69007 Lyon (FR)
(72) Inventeur: Delvenne, Corinne, 52200 Langres (FR); Pionnier, Jérôme, 52800 Nogent (FR); Agnus, Bruno, 52600 Chaudenay (FR)
(74) Mandataire: Remy, Vincent Noel Paul

(56) Documents cités:
- EP-A1- 0 536 006
- DE-A1- 4 036 400
- DE-U1- 20 014 875
- FR-A1- 2 485 133

## Description

La présente invention concerne un corps de témoin d'usure de garniture de friction de véhicule automobile et un témoin d'usure comprenant un tel corps.

Une garniture de friction de véhicule automobile est habituellement destinée à venir en contact avec des pièces en mouvement pour en réduire la vitesse par frottement. Par exemple, une garniture de friction peut équiper un système de freinage de véhicule automobile.

La garniture de friction travaillant par frottement, elle est particulièrement sujette à l'usure et doit être changée lorsqu'elle est usée.

Afin de renseigner un utilisateur sur l'usure de la garniture de friction, on connaît déjà, dans l'état de la technique, un corps de témoin d'usure de garniture de friction, le témoin étant du type comportant deux fils conducteurs électriques, et le corps comportant une face d'usure et deux faces opposées adjacentes à la face d'usure.

Le corps de témoin d'usure est habituellement agencé dans la garniture de friction, sa face d'usure étant en retrait par rapport à une surface de frottement de la garniture de friction.

Ainsi, lorsque la garniture de friction s'use, la face d'usure du corps de témoin d'usure commence par affleurer la surface de frottement de la garniture, puis finit par s'user elle aussi, jusqu'à ce qu'un premier fil contenu par le corps soit sectionné par frottement.

Lorsque ce fil est sectionné, l'utilisateur est averti que la garniture a atteint un premier niveau d'usure.

L'usure de la garniture peut alors continuer jusqu'à ce que le deuxième fil contenu par le corps soit lui aussi sectionné par le frottement. L'utilisateur est ainsi averti que la garniture a atteint un second niveau d'usure et qu'elle se trouve donc en fin de vie et devrait être remplacée.

Dans le cas d'un témoin d'usure comprenant deux fils, le corps est habituellement surmoulé par dessus les fils. Puisque les fils sont flexibles, cette opération de surmoulage est relativement coûteuse et difficile à mettre en oeuvre pour assurer un positionnement précis des fils dans le corps.

Le document DE 20014875 U1 montre un autre type de témoin, dans lequel les fils forment des boucles qui sont tenues sans surmoulage dans des gorges pratiquées dans le corps du témoin.

L'invention a notamment pour but de simplifier la fabrication d'un témoin d'usure, tout en assurant une précision du positionnement des fils dans le corps de témoin d'usure.

A cet effet, l'invention a pour objet un corps de témoin d'usure de garniture de friction de véhicule automobile, le témoin étant du type comportant deux fils conducteurs électriques, et le corps comportant une face d'usure et deux faces opposées adjacentes à la face d'usure, **caractérisé en ce que** chacune des faces opposées est munie d'une gorge de logement d'un fil conducteur électrique respectif, chaque gorge formant un circuit dans la face correspondante, et comportant une portion proximale définie comme étant sa portion la plus proche de la face d'usure.

Dans la suite de la description, on désignera par le terme « face » toute face externe du corps du témoin d'usure.

Grâce aux gorges de logement, en forme de circuit dans chaque face, les fils peuvent être agencés de manière simple et précise dans le corps. La portion proximale de chaque gorge permet de positionner le fil correspondant par rapport à la face d'usure, définissant ainsi de manière simple et précise un niveau d'usure.

De plus, le corps peut, grâce à l'invention, être fabriqué séparément des fils, ce qui permet une plus grande flexibilité de la chaîne de montage de témoins d'usure.

De manière optionnelle, un corps de témoin d'usure selon l'invention peut comporter l'une ou plusieurs des caractéristiques suivantes.
- Chaque gorge relie deux extrémités débouchant dans une face opposée à la face d'usure.
- Le corps comporte des moyens de maintien de chaque fil conducteur électrique dans sa gorge respective. Ces moyens de maintien facilitent l'agencement des fils dans les gorges de logement.
- Les moyens de maintien comportent des moyens d'encliquetage d'un fil dans sa gorge de logement. De tels moyens d'encliquetage permettent un montage très simple, rapide et efficace des fils dans les gorges du corps, notamment du fait qu'aucun apport externe de colle ni aucune soudure ne sont requis pour monter les fils sur le corps du témoin d'usure.
- Chaque gorge comporte deux extrémités qui débouchent dans une face opposée à la face d'usure. Les fils peuvent ainsi sortir de l'épaisseur du corps par sa face opposée à la face d'usure, ce qui est préférable compte tenu de l'échauffement important qui se produit au voisinage de cette dernière lors du frottement de la garniture de friction.
- Chaque gorge comporte une portion proximale définie comme étant sa portion la plus proche de la face d'usure, les portions proximales des deux gorges n'étant pas à égale distance de la face d'usure. On définit ainsi deux niveaux d'usure, révélés chacun par la section d'un fil.
- Le corps est fabriqué dans une matière choisie parmi du PEEK (Polyétheréthercétone), du TPI (Polyimide ThermoPlastique), du LCP (Polymère à Cristaux liquides) ou du Vyncolit®.

L'invention à également pour objet un témoin d'usure d'une garniture de friction du type comportant deux fils conducteurs électriques reliant un corps de témoin d'usure à un connecteur électrique, **caractérisé en ce que** le corps est un corps tel que défini précédemment.

De préférence, le témoin d'usure comporte une résistance montée en série avec le fil logé dans la gorge ayant la portion proximale la plus proche de la face d'usure, cette résistance étant court-circuitée par l'autre fil présent dans l'autre gorge.

Cette résistance permet de définir simplement le niveau d'usure de la garniture de friction, par simple mesure d'une impédance entre des bornes communes aux deux fils.

En effet, tant que le deuxième fil court-circuite la résistance, l'impédance mesurée est sensiblement nulle, et la garniture de friction n'a pas encore atteint son premier niveau d'usure.

Lorsque ce fil est sectionné, l'impédance devient celle de la résistance, ce qui signifie que la garniture de friction a atteint son premier niveau d'usure.

Lorsque le fil monté en série avec la résistance est également sectionné, l'impédance devient « infinie », ce qui signifie que la garniture de friction a atteint son deuxième niveau d'usure.

De préférence, la résistance est agencée dans le connecteur électrique.

En effet, la résistance serait exposée à de fortes températures (généralement jusqu'à 250°C) si elle était agencée dans le corps, ce qui pourrait l'endommager.

De plus, de cette manière, la résistance peut être montée avec les fils dans le connecteur, ce qui permet de fabriquer séparément le corps de témoin d'usure et de l'assembler ultérieurement au reste du témoin d'usure.

L'invention sera mieux comprise à la lecture de la description qui va suivre, donnée uniquement à titre d'exemple et faite en se référant aux dessins annexés dans lesquels :
- la figure 1 est une vue en perspective d'un témoin d'usure selon un mode de réalisation de l'invention ;
- les figures 2 et 3 sont des vues en perspective représentant les faces opposées d'un corps du témoin d'usure de la figure 1 ;
- la figure 4 est une vue de face du corps des figures 2 et 3, sur laquelle les deux faces sont visibles par transparence ;
- la figure 5 est une vue en perspective d'une garniture de frictions de véhicule automobile prévue pour recevoir le témoin d'usure de la figure 1 ;
- la figure 6 est une vue en perspective de fils et d'une résistance du témoin d'usure de la figure 1 ;

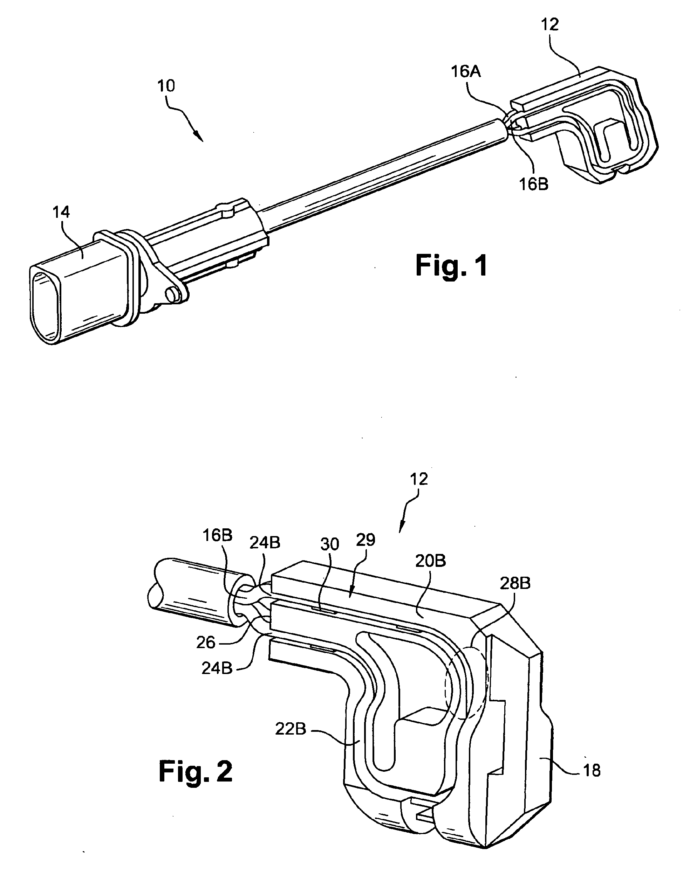

On a représenté, sur la figure 1, un témoin d'usure selon un mode de réalisation de l'invention, désigné par la référence générale 10.

Le témoin d'usure 10 comporte un corps 12 de témoin d'usure et un connecteur électrique 14, reliés entre eux par deux fils conducteurs électriques 16A, 16B.

Le corps 12, représenté plus en détail sur les figures 2 à 4, comporte une face d'usure 18 et deux faces opposées 20A, 20B adjacentes à la face d'usure 18. De préférence, le corps 12 est corps est fabriqué dans une matière choisie parmi du PEEK (Polyétheréthercétone), du TPI (Polyimide ThermoPlastique), du LCP (Polymère à Cristaux liquides) ou du Vyncolit®.

Chacune des faces opposées 20A, 20B est munie d'une gorge 22A, 22B de logement de l'un des fils conducteurs électriques 16A, 16B respectif.

Chacune de ces gorges 22A, 22B comporte deux extrémités 24A, 24B qui débouchent dans une face 26 opposée à la face d'usure 18. Chaque gorge 22A, 22B, forme un circuit dans la face 20A, 20B correspondante, reliant les deux extrémités de cette gorge, en passant par une portion 28A, 28B dite proximale, définie comme étant la portion du circuit, dans la face 20A, 20B, qui est la plus proche de la face d'usure 18.

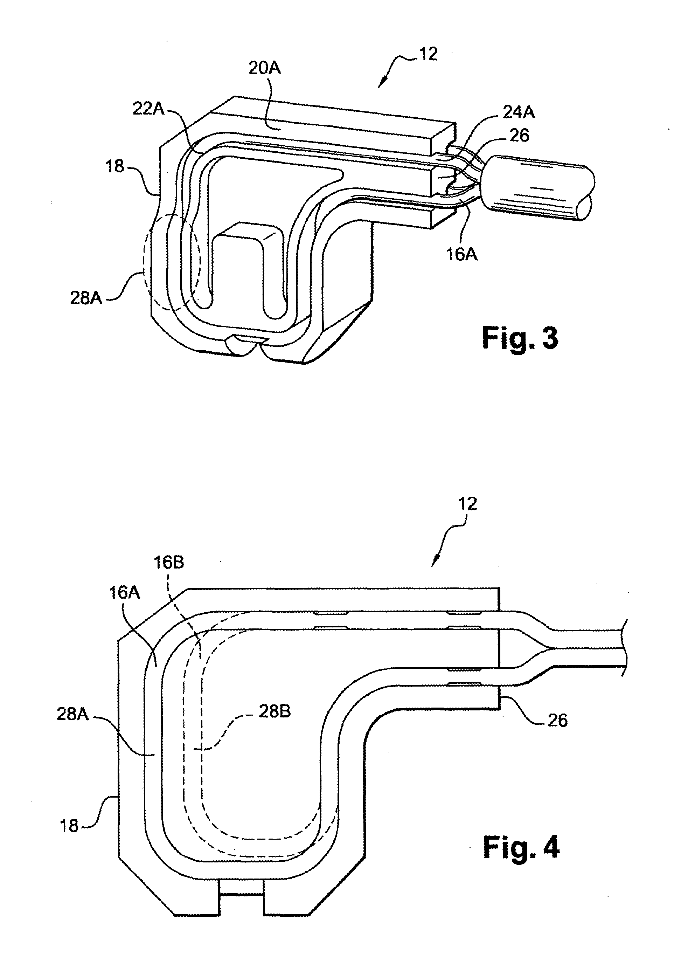

Comme cela est visible sur la figure 4, les portions proximales 28A, 28B des deux gorges 22A, 22B ne sont pas à égale distance de la face d'usure 18. Ainsi, lorsque le corps est usé, le fil 16A dont la gorge 22A comporte la portion proximale 28A la plus proche de la face d'usure 18 sera sectionné avant l'autre fil 16B.

Ce fil 16A définit alors un premier niveau d'usure, et l'autre fil 16B définit un second niveau d'usure.

Le corps 12 comporte également des moyens 29 de maintien de chaque fil conducteur électrique 16A, 16B dans sa gorge 22A, 22B respective. Par exemple, les moyens de maintien 29 comportent des moyens 30 d'encliquetage d'un fil 16A, 16B dans sa gorge de logement 22A, 22B, comprenant des pattes d'encliquetage maintenant le fil dans la gorge. De tels moyens d'encliquetage sont avantageux en ce qu'ils permettent un maintien à l'aide d'une opération de montage simple et économique des fils, et cela sans rapporter d'élément de maintien supplémentaire. En variante, moins avantageuse mais entrant dans le cadre de l'invention, les moyens de maintien pourraient comporter de la colle ou tout autre moyen de maintien.

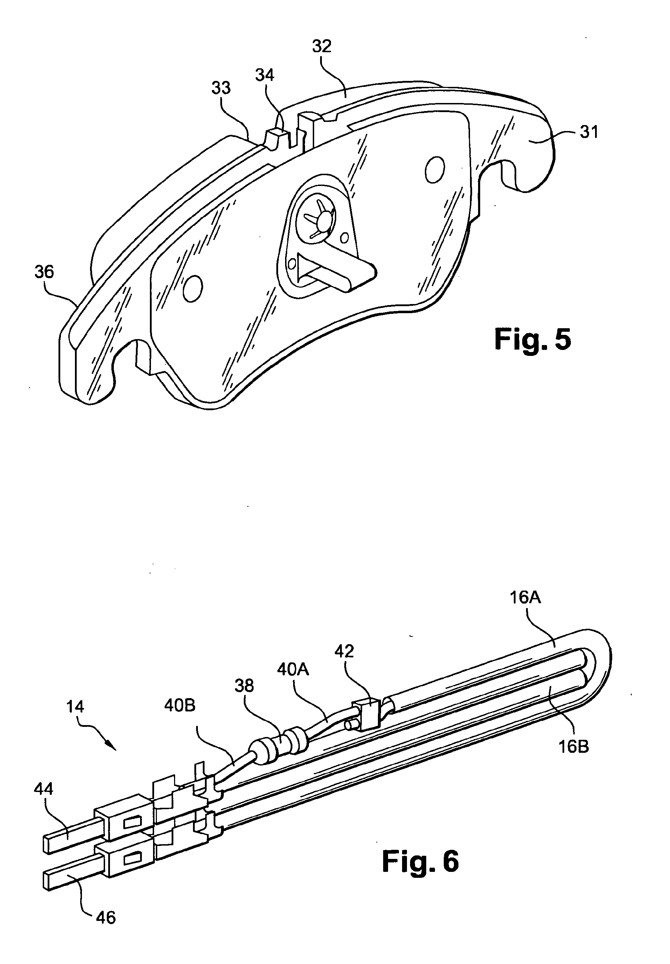

Le corps 12 est destiné à être agencé sur une plaquette de frein de véhicule automobile, telle que celle représentée sur la figure 5, comportant une plaque-support 31 et une garniture de friction 32.

A cet effet, la plaque-support 31 est munie d'un logement 34 pour le corps 12, tandis que la garniture de friction comporte un dégagement 33 autour de ce logement 34, de sorte que la face d'usure 18 du corps est en retrait par rapport à une surface de frottement 36 de la garniture de friction 32. Ainsi, la surface de frottement 36 de la garniture de friction 32 peut s'user avant que la face d'usure 18 ne s'use.

Lorsque la face d'usure 18 commence à s'user, le fil 16A subit rapidement la même usure et finit par se sectionner, marquant le passage au premier niveau d'usure.

Si l'usure se poursuit, l'épaisseur de la garniture de friction 32 continue de diminuer et l'usure du corps 32 devient telle, pour une épaisseur prédéfinie de la garniture de friction, que le fil 16B finit lui aussi par être sectionné.

Le connecteur 14 permet de connecter le témoin d'usure 10 à un système électronique à deux bornes (non représenté), grâce à deux fiches électriques 44, 45. A cet effet, il relie les quatre brins des deux fils 16A, 16B issus du corps 12 aux deux fiches électriques 44, 45.

Le connecteur 14 comporte une résistance 38 comprenant une première patte 40A, reliée électriquement au premier fil 16A, par exemple à l'aide d'une bague de sertissage 42, et une seconde patte 40B, reliée électriquement à la fois à une première 44 des fiches et au second fil 16B, par exemple par sertissage.

Ainsi, la résistance 38 est montée en série avec le fil 16A logé dans la gorge 22A ayant la portion proximale la plus proche de la face d'usure 18, cette résistance 38 étant court-circuitée par l'autre fil 16B.

Le système électronique (non représenté) comporte des moyens de mesure de l'impédance de l'ensemble constitué par les fils et la résistance, l'impédance mesurée permettant de déterminer quel est le niveau d'usure du corps 12, comme cela a été expliqué ci-dessus.

On notera enfin que l'invention n'est pas limitée au mode de réalisation précédemment décrit, mais englobe toute variante reprenant, avec des moyens équivalents, ses caractéristiques essentielles, telles que décrites dans les revendications.

## Revendications

1. Corps (12) de témoin d'usure (10) de garniture de friction (32) de véhicule automobile, le témoin (10) étant du type comportant deux fils conducteurs électriques (16A, 16B), et le corps (12) comportant une face d'usure (18) et deux faces opposées (20A, 20B) adjacentes à la face d'usure (18), **caractérisé en ce que** chacune des faces opposées (20A, 20B) est munie d'une gorge (22A, 22B) de logement d'un fil conducteur électrique (16A, 16B) respectif, chaque gorge (22A, 22B) formant un circuit dans la face (20A, 20B) correspondante, et comportant une portion proximale (28A, 28B) définie comme étant sa portion la plus proche de la face d'usure (18).

2. Corps (12) de témoin d'usure (10) selon la revendication 1, dans lequel chaque gorge (22A, 22B) relie deux extrémités (24A, 24B) débouchant dans une face (26) opposée à la face d'usure (18).

3. Corps (12) de témoin d'usure (10) selon la revendication 1 ou 2, comportant des moyens (29) de maintien de chaque fil conducteur électrique (16A, 16B) dans sa gorge respective (22A, 22B).

4. Corps (12) de témoin d'usure (10) selon l'une quelconque des revendications 1 à 3, dans lequel les moyens de maintien (29) comportent des moyens (30) d'encliquetage d'un fil (16A, 16B) dans sa gorge de logement (22A, 228).

5. Corps (12) de témoin d'usure (10) selon l'une quelconque des revendications 1 à 4, dans lequel chaque gorge (22A, 22B) comporte deux extrémités (24A, 24B) qui débouchent dans une face (26) opposée à la face d'usure (18).

6. Corps (12) de témoin d'usure (10) selon l'une quelconque des revendications 1 à 5, dans lequel , les portions proximales (28A, 28B) des deux gorges (22A, 22B) ne sont pas à égale distance de la face d'usure (18).

7. Corps (12) de témoin d'usure (10) selon l'une quelconque des revendications 1 à 6, fabriqué dans une matière choisie parmi du PEEK (Polyétheréthercétone), du TPI (Polyimide ThermoPlastique), du LCP (Polymère à Cristaux liquides) ou du Vyncolit®.

8. Témoin d'usure (10) d'une garniture de friction (32), du type comportant deux fils conducteurs électriques (16A, 16B) reliant un corps (12) de témoin d'usure à un connecteur électrique (14), **caractérisé en ce que** le corps (12) est un corps selon l'une quelconque des revendications 1 à 7.

9. Témoin d'usure (10) selon la revendication 8, comportant un corps (12) de témoin selon la revendication 5, et comportant une résistance (38) montée en série avec le fil (16A) logé dans la gorge ayant la portion proximale (28A) la plus proche de la face d'usure (18), cette résistance (38) étant court-circuitée par l'autre fil (16B).

10. Témoin d'usure (10) selon la revendication 9, dans lequel la résistance (38) est agencée dans le connecteur électrique (14).

## Claims

1. Wear indicator (10) element (12) for the friction lining (32) of an automobile vehicle, the wear indicator (10) being of the type comprising two electrical conductors (16A, 16B), and the element (12) comprising a wearing face (18) and two opposite faces (20A, 20B) adjacent to the wearing face (18), **characterised in that** each of the opposite faces (20A, 20B) is equipped with a groove (22A, 22B) to house a respective electrical conductor (16A, 16B), each groove (22A, 22B) forming a circuit in the corresponding face (20A, 20B), and comprising a proximal portion (28A, 28B) defined as being its portion closest to the wearing face (18).

2. Wear indicator (10) element (12) according to claim 1, wherein each groove (22A, 22B) connects two ends (24A, 24B) opening in a face (26) opposite the wearing face (18).

3. Wear indicator (10) element (12) according to claim 1 or 2, comprising means (29) for holding each electrical conductor (16A, 16B) in its respective groove (22A, 22B).

4. Wear indicator (10) element (12) according to any of claims 1 to 3, wherein the holding means (29) comprise means (30) for clipping an electrical conductor (16A, 16B) in its housing groove (22A, 22B).

5. Wear indicator (10) element (12) according to any of claim 1 to 4, wherein each groove (22A, 22B) comprises two ends (24A, 24B) opening in a face (26) opposite the wearing face (18).

6. Wear indicator (10) element (12) according to any of claims 1 to 5, wherein the proximal portions (28A, 28B) of the two grooves (22A, 22B) are not the same distance from the wearing face (18).

7. Wear indicator (10) element (12) according to any of claims 1 to 6, manufactured from a material chosen amongst PEEK (Polyetheretherketone), TPI (thermoplastic polyimide), LCP (liquid crystal polymer) or Vyncolit®.

8. Wear indicator (10) of a friction lining (32), of the type comprising two electrical conductors (16A, 16B) connecting a wear indicator element (12) to an electrical connector (14), **characterised in that** the element (12) is an element according to any of claims 1 to 7.

9. Wear indicator (10) according to claim 8, comprising a wear indicator element (12) according to claim 5, and comprising a resistor (38) mounted in series with the conductor (16A) housed in the groove having the proximal portion (28A) closest to the wearing face (18), this resistor (38) being short-circuited by the other conductor (16B).

10. Wear indicator (10) according to claim 9, wherein the resistor (38) is located in the electrical connector (14).

## Patentansprüche

1. Körper (12) für Verschleißanzeige (10) eines Kraftfahrzeug-Reibbelags (32), wobei die Anzeige (10) des Typs ist, der zwei elektrische Leiter (16A, 16B) aufweist, und wobei der Körper (12) eine Verschleißfläche (18) und zwei entgegen gesetzte Flächen (20A, 20B) neben der Verschleiß fläche (18) aufweist, **dadurch gekennzeichnet, dass** jede der entgegen gesetzten Flächen (20A, 20B) mit einer Hohlkehle (22A, 22B) zum Aufnehmen eines jeweiligen elektrischen Leiters (16A, 16B) versehen ist, wobei jede Hohlkehle (22A, 22B) einen Kreislauf in der entsprechenden Fläche (20A, 20B) bildet und einen proximalen Abschnitt (28A, 28B) aufweist, der als ihr der Verschleißfläche (18) am nächsten liegender Abschnitt definiert ist.

2. Körper (12) für Verschleißanzeige (10) nach Anspruch 1, bei dem jede Hohlkehle (22A, 22B) zwei Enden (24A, 24B) verbindet, die in eine Fläche (26) münden, die der Verschleiß fläche (18) entgegen gesetzt ist.

3. Körper (12) für Verschleißanzeige (10) nach Anspruch 1 oder 2, der Mittel (29) zum Halten jedes elektrischen Leiters (16A, 16B) in seiner jeweiligen Hohlkehle (22A, 22B) aufweist.

4. Körper (12) für Verschleißanzeige (10) nach einem der Ansprüche 1 bis 3, bei dem die Haltemittel (29) Mittel (30) zum Einrasten eines Leiters (16A, 16B) in seine Aufnahmehohlkehle (22A, 22B) aufweisen.

5. Körper (12) für Verschleißanzeige (10) nach einem der Ansprüche 1 bis 4, bei dem jede Hohlkehle (22A, 22B) zwei Enden (24A, 24B) aufweist, die in eine Fläche (26) münden, die der Verschleiß fläche (18) entgegen gesetzt ist.

6. Körper (12) für Verschleißanzeige (10) nach einem der Ansprüche 1 bis 5, bei dem die proximalen Abschnitte (28A, 28B) der zwei Hohlkehlen (22A, 22B) von der Verschleiß fläche (18) nicht gleich weit entfernt sind.

7. Körper (12) für Verschleißanzeige (10) nach einem der Ansprüche 1 bis 6, der aus einem Werkstoff hergestellt ist, der aus PEEK (Polyetheretherketon), TPI (Polyimid-Thermoplast), LCP (Polymer mit Flüssigkristallen) oder Vyncolit® ausgewählt ist.

8. Verschleißanzeige (10) eines Reibbelags (32) des Typs, die zwei elektrische Leiter (16A, 16B) aufweist, die einen Verschleißanzeigenkörper (12) mit einem elektrischen Verbinder (14) verbinden, **dadurch gekennzeichnet, dass** der Körper (12) ein Körper nach einem der Ansprüche 1 bis 7 ist.

9. Verschleißanzeige 10 nach Anspruch 8, die einen Verschleißanzeigenkörper (12) nach Anspruch 5 aufweist und einen Widerstand (38) enthält, der mit dem Leiter (16A), der in der Hohlkehle untergebracht ist, die den proximalen Abschnitt (28A) hat, der der Verschleißseite (18) am nächsten ist, in Serie geschaltet ist, wobei dieser Widerstand (38) von dem anderen Leiter (16B) kurzgeschlossen ist.

10. Verschleißanzeige (10) nach Anspruch 9, bei der der Widerstand (38) in dem elektrischen Verbinder (14) eingerichtet ist.
